# EUROPEAN PATENT SPECIFICATION

(11) **EP 3 615 775 B1**
(45) Date of publication and mention of the grant of the patent: **10.03.2021**
(21) Application number: 17724847.3
(22) Date of filing: 28.04.2017
(51) Int. Cl.: F01N 3/20

(54) **METHOD OF CONTROLLING REDUCING AGENT FEEDING AND EXHAUST SYSTEM**
VERFAHREN ZUR STEUERUNG DER REDUKTIONSMITTELZUFUHR UND ABGASSYSTEM
PROCÉDÉ DE RÉGULATION D'UNE ALIMENTATION EN AGENTS RÉDUCTEURS ET SYSTÈME D'ÉCHAPPEMENT

(43) Date of publication of application: 04.03.2020
(73) Proprietor: Wärtsilä Finland Oy, 65100 Vaasa (FI)
(72) Inventor: ALHO, Timo, 65100 Vaasa (FI); LÖVHOLM, Markus, 65100 Vaasa (FI); NORDBERG, Daniel, 65100 Vaasa (FI)
(74) Representative: Berggren Oy, Helsinki & Oulu
(86) International application number: PCT/FI2017/050332
(87) International publication number: WO 2018/197742

(56) References cited:
- DE-T5-112011 101 563
- US-A1- 2008 250 774
- US-A1- 2011 239 627
- US-A1- 2012 233 986
- US-A1- 2014 208 721

## Description

### Technical field of the invention

The present invention relates to a method of controlling feeding of reducing agent into an exhaust system of an internal combustion engine, where the exhaust system is provided with one or more SCR elements for selective catalytic reduction, as defined in claim 1. The invention also concerns an exhaust system in accordance with the other independent claim.

### Background of the invention

Due to continuously tightening regulations concerning nitrogen oxide (NOₓ) emissions of internal combustion engines in ships and power plants, selective catalytic reduction (SCR) systems are becoming more and more common. An SCR system comprises a catalytic converter, through which the exhaust gas flows. Reducing agent is introduced into the exhaust gas stream upstream from the catalytic converter. The reducing agent is typically urea (CO(NH₂)₂) in aqueous solution. In the exhaust system the water evaporates and as the urea reacts with the water, ammonia (NH₃) and carbon dioxide (CO₂) is formed. In the catalytic converter, the ammonia reacts with the NOₓ and nitrogen and water is formed.

In SCR systems, correct dosing of the reducing agent is important. If the amount of the reducing agent is too small, the NOₓ emissions are not effectively reduced. On the other hand, if excessive amounts of reducing agent are introduced into the exhaust system, part of the ammonia flows through the catalytic converter without reacting with the NOₓ. This is called ammonia slip.

An exhaust system can be further provided with an oxidation catalyst, which converts carbon monoxide (CO) and hydrocarbons to carbon dioxide and water.

To improve accuracy of the dosing of the reducing agent, an SCR system can be equipped with a NOₓ sensor that measures NOₓ concentration downstream from SCR elements. A problem with NOₓ measurements is that part of the ammonia that is present in the exhaust gas stream after the catalytic converter is converted to NOₓ in the oxidation catalyst. As the reducing agent injection rate is increased, the NOₓ concentration after the catalytic converter reduces. However, at a certain point increased ammonia slip leads to increased NOₓ concentration downstream from the oxidation catalyst. Therefore, by means of simple NOₓ measurement it is difficult to determine whether the reducing agent injection rate should be increased or decreased.

US 2008/250774 A1 discloses a method of controlling a mass flow rate of a dosing agent. A base dose signal corresponding to a mass flow rate of a dosing agent is generated, a dose adjustment is determined based upon an NH₃ signal indicating NH₃ measured downstream of a catalyst, and a dosing signal is generated based on the dose signal and the dose adjustment.

US 2014/208721 A1 discloses a method for diagnosing a condition of a component of an exhaust aftertreatment system. In the method, a quantity of nitrogen oxide (NOₓ) in exhaust gas downstream of an SCR catalyst is detected, and the detected quantity is normalized based on a ratio of an ammonia NH₃ flow rate upstream of the SCR catalyst to a NOₓ flow rate upstream of the SCR catalyst.

U 2012/233986 A1 discloses a method to control a selective catalyst reduction system. In the method, a current mid-bed NH₃ amount between two SCR catalyst beds is determined. A NOₓ sensor positioned in the mid-bed location is operated to determine a current mid-bed NOₓ amount and a mid-bed ammonia to NOₓ ratio.

### Summary of the invention

An object of the present invention is to provide an improved method of controlling feeding of reducing agent into an exhaust system of an internal combustion engine, where the exhaust system is provided with one or more SCR elements for selective catalytic reduction. The characterizing features of the method according to the invention are given in claim 1. Another object of the invention is to provide an improved exhaust system for an internal combustion engine. The characterizing features of the exhaust system are given in the other independent claim.

The method according to the invention comprises the steps of
- determining a first concentration in exhaust gas stream on the downstream side of the SCR elements and upstream from any oxidation catalyst arranged on the downstream side of the SCR elements, the first concentration being the concentration of NOₓ,
- determining a second concentration in the exhaust gas stream in the same location as the first concentration, wherein the second concentration is the combined concentration of NOₓ and NH₃ and the second concentration is determined by using a NOₓ sensor that is cross-sensitive to NH₃,
- comparing the first concentration to a first predetermined limit value,
- comparing the second concentration to a second predetermined limit value, and
- decreasing the reducing agent feeding into the exhaust system in case the first concentration is below the first predetermined limit value and the second concentration is above the second predetermined limit value.

The exhaust system according to the invention comprises
- at least one SCR element for selective catalytic reduction,
- at least one reducing agent injector for introducing reducing agent into the exhaust system upstream from the SCR element,
- a first sensor for determining the concentration of NOₓ in exhaust gas stream on the downstream side of the SCR elements and upstream from any oxidation catalyst arranged on the downstream side of the SCR elements,
- a second sensor that is a NOₓ sensor cross-sensitive to NH₃ for determining the combined concentration of NH₃ and NOₓ on the downstream side of the SCR elements, and
- a control system for controlling injection of the reducing agent,
   wherein the control system is configured to
- compare the concentration measured with the first sensor to a first predetermined limit value,
- compare the concentration measured with the second sensor to a second predetermined limit value, and
- to reduce injection of the reducing agent if the concentration measured with the first sensor is below the first predetermined limit value and the concentration measured with the second sensor is above the second predetermined limit value.

With the method according to the invention and in the exhaust system according to the invention, overdosing of the reducing agent can be detected and addressed reliably and quickly.

According to the invention, the second concentration is the combined concentration of NOₓ and NH₃ and the second concentration is determined by using a NOₓ sensor that is cross-sensitive to NH₃. This has the benefit that NOₓ sensors cross-sensitive to NH₃ are less expensive than NH₃ sensors. The second concentration can be measured between the SCR elements and the oxidation catalysts or on the downstream side of the oxidation catalysts. Alternatively, the second concentration can be measured by separating a gas sample from main exhaust gas stream, conducting the gas sample through an oxidation catalyst and measuring the second concentration on the downstream side of the oxidation catalyst.

According to an embodiment of the invention, in the exhaust system the second sensor is arranged to measure the combined concentration of NOₓ and NH₃ between the SCR elements and the oxidation catalysts.

According to an embodiment of the invention, the second sensor is arranged to measure the combined concentration of NOₓ and NH₃ on the downstream side of the oxidation catalysts.

According to an embodiment of the invention, the exhaust system comprises a by-pass duct for separating a gas sample from main exhaust gas stream on the downstream side of the SCR elements and an oxidation catalyst arranged in the by-pass duct, and the second sensor is arranged in the by-pass duct on the downstream side of the oxidation catalyst to measure the combined concentration of NOₓ and NH₃.

### Brief description of the drawings

Embodiments of the invention are described below in more detail with reference to the accompanying drawings, in which
Fig. 1 shows schematically a piston engine with an exhaust system,
Fig. 2 shows schematically a catalytic converter for selective catalytic reduction and a measuring arrangement according to an embodiment of the invention,
Fig. 3 shows schematically a catalytic converter for selective catalytic reduction and a measuring arrangement according to another embodiment of the invention,
Fig. 4 shows schematically a catalytic converter for selective catalytic reduction and a measuring arrangement according to still another embodiment of the invention, and
Fig. 5 shows as a flowchart a method according to an embodiment of the invention.

### Description of embodiments of the invention

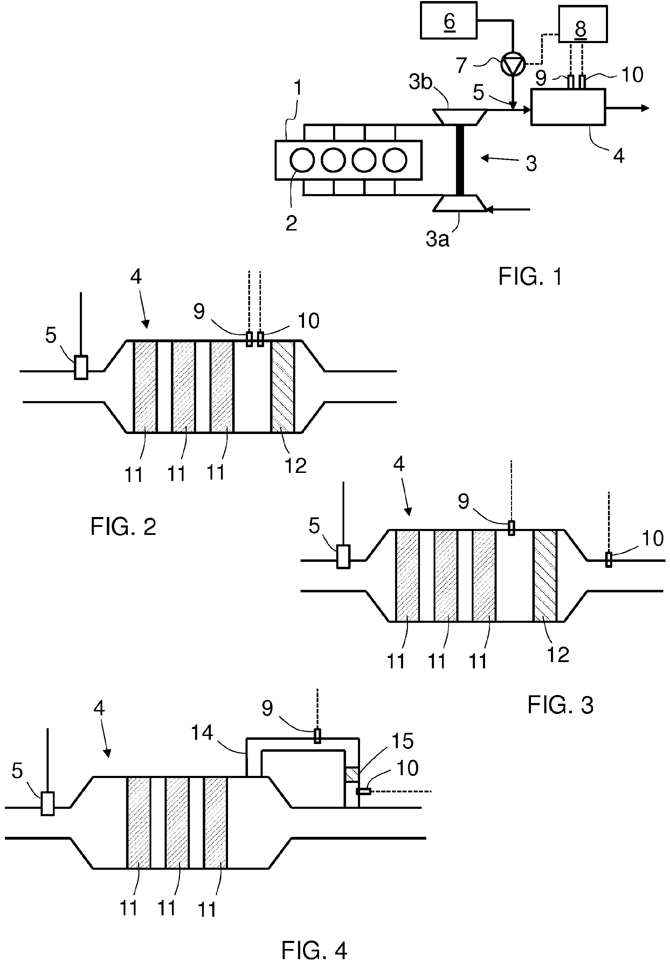

Figure 1 shows schematically an internal combustion engine 1. The engine 1 comprises a plurality of cylinders 2. Figure 1 shows four cylinders 2, but the engine 1 could comprise any reasonable number of cylinders 2. The engine 1 is a large internal combustion engine, such as a main or an auxiliary engine of a ship or an engine that is used at a power plant for producing electricity. The engine 1 is provided with an exhaust system. In the embodiment of figure 1, a turbocharger 3 comprising a compressor 3a and a turbine 3b forms part of the exhaust system. However, the turbocharger 3 is not an essential part of the exhaust system. The exhaust system could also comprise two or more turbochargers that are arranged in series and/or in parallel.

The exhaust system further comprises a catalytic converter 4 for selective catalytic reduction (SCR). In the embodiment of figure 1, the catalytic converter 4 is arranged on the downstream side of the turbine 3b of the turbocharger 3. However, the catalytic converter 4 could also be on the upstream side of the turbocharger 3. In an exhaust system with two-stage turbocharging, the catalytic converter 4 could be, for instance, between the turbine of a high-pressure turbocharger and the turbine of a low-pressure turbocharger. However, also other locations are possible.

Figures 2 to 5 show schematically examples of a catalytic converter 4 that can be used in the exhaust system. The catalytic converter 4 comprises at least one SCR element 11. In the embodiments of the figures, the catalytic converter 4 comprises three SCR elements 11. The SCR elements 11 are ceramic honeycomb structures that are coated with a catalyst material. Reducing agent is injected into exhaust gas stream upstream from the SCR elements 11. The reducing agent is stored in a tank 6 and injected into the exhaust gas stream through a reducing agent injector 5. The exhaust system could comprise two or more reducing agent injectors 5. A feed pump 7 supplies the reducing agent from the tank 6 to the reducing agent injector 5. The reducing agent can be urea in aqueous solution. The urea that is injected into the exhaust system is mixed with the exhaust gas and breaks up into ammonia (NH₃) and carbon dioxide (CO₂) due to the heat of the exhaust gas. On the surface of the SCR elements 11, ammonia molecules react with NOₓ and form nitrogen and water. In the embodiments of the figures, the reducing agent is injected into main exhaust gas stream between the turbine 3b of the turbocharger 3 and the catalytic converter 4. However, it could also be injected on the upstream side of the turbine 3b. It is also possible to mix the reducing agent with partial exhaust gas stream, which is then mixed with the main exhaust gas stream.

The exhaust system can be further provided with at least one oxidation catalyst 12. In the embodiments of figures 2 and 3, an oxidation catalyst 12 is arranged inside the catalytic converter 4, downstream from the SCR elements 11. The purpose of the oxidation catalyst 12 is to oxidize carbon monoxide and unburned hydrocarbons. Also at least part of the excess ammonia oxidizes forming mainly nitrogen oxides and water. The oxidation catalyst 12 is not an essential part of the exhaust system. The oxidation catalyst 12 could also be located outside the catalytic converter 4. The exhaust system could also comprise several oxidation catalysts 12.

For controlling the amount of the reducing agent that is introduced into the exhaust gas stream, the exhaust system is provided with a first sensor 9 and with a second sensor 10. The first sensor 9 is configured to determine solely the NOₓ concentration of the exhaust gas stream between the SCR elements 11 and possible oxidation catalysts 12. The second sensor 10 is configured to determine a second concentration in the same location. The second concentration can be either NH₃ concentration or the combined concentration of NH₃ and NOₓ. The second sensor 10 can thus be an NH₃ sensor or a NOₓ sensor that is cross-sensitive to NH₃ and can thus measure the combined concentration of NH₃ and NOₓ. In the oxidation catalyst 12, NH₃ is at least partly converted to NOₓ. Therefore, if an NH₃ sensor is used, the concentration needs to be measured upstream from any oxidation catalyst 12 that is located on the downstream side of the SCR elements 11. If the combined concentration of NH₃ and NOₓ is measured using a sensor that is capable to detect both NH₃ and NOₓ, the concentration could also be measured on the downstream side of the oxidation catalyst 12. Sensors capable of measuring both NH₃ and NOₓ concentration are beneficial because of the lower price compared to NH₃ sensors.

In the embodiment of figure 2, both the first sensor 9 and the second sensor 10 are arranged to measure the desired concentration between the SCR elements 11 and the oxidation catalyst 12. The second sensor 10 can measure either the NH₃ concentration or the combined concentration of NH₃ and NOₓ. Figure 3 shows an embodiment, where the first sensor 9 measures the NOₓ concentration between the SCR elements 11 and the oxidation catalyst 12, and the second sensor 10 measures the combined concentration of NH₃ and NOₓ on the downstream side of the oxidation catalyst 12. In the embodiment of figure 4, the exhaust system is provided with a by-pass duct 14. The by-pass duct 14 is provided with an oxidation catalyst 15. A gas sample is introduced into the by-pass duct 14. The first sensor 9 is arranged to measure the NOₓ concentration on the upstream side of the oxidation catalyst 15. The second sensor 10 is arranged on the downstream side of the oxidation catalyst 15 for measuring the combined concentration of NH₃ and NOₓ. Also other combinations are possible. For instance, the by-pass duct 14 does not need to be provided with an oxidation catalyst 15.

The monitoring of the concentrations does not need to be continuous, but the concentrations can be determined for example when the engine load changes or some other changes are likely to affect the NOₓ emissions of the engine 1.

The exhaust system is provided with a control system, which controls the supply of the reducing agent on the basis of the measurements that are carried out using the first sensor 9 and the second sensor 10. The control system comprises a control unit 8. The sensors 9, 10 are connected to the control unit 8 and configured to transmit to the control unit 8 signals representing the measured concentrations.

If the feeding rate of the reducing agent is too small compared to the NOₓ concentration before the catalytic converter 4, the catalytic converter 4 cannot effectively reduce the NOₓ emissions. In such a situation, increasing of the reducing agent injection reduces the NOₓ concentration on the downstream side of the catalytic converter 4. However, increasing of the reducing agent injection also increases ammonia slip through the catalytic converter 4. Part of the ammonia that flows through the catalytic converter 4 is converted to NOₓ in the oxidation catalyst 12. In an overdosing situation, the NOₓ concentration between the SCR elements 11 and the oxidation catalyst 12 decreases, but the NH₃ concentration between the SCR elements 11 and the oxidation catalyst 12 increases. Since the ammonia is converted in the oxidation catalyst 12 to NOₓ, increased ammonia slip can also be detected as an increase of the NOₓ concentration on the downstream side of the oxidation catalyst 12. Decreasing NOₓ concentration before the oxidation catalyst 12 and increasing NOₓ concentration after the oxidation catalyst 12 can thus be an indication of excessive reducing agent feeding.

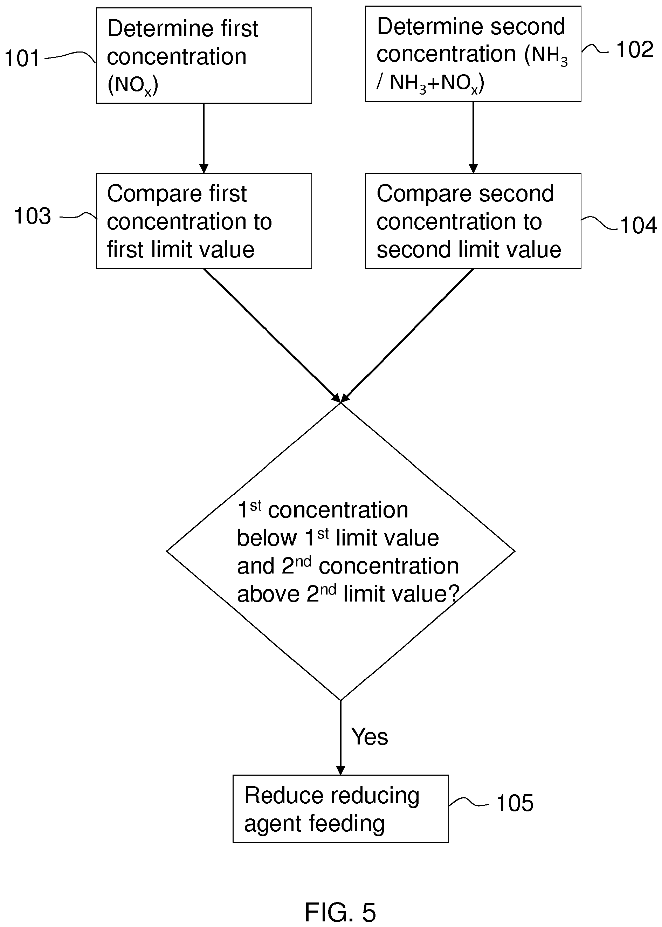

The method according to the invention is shown as a flow chart in figure 5. In a first phase of the method, a first concentration (NOₓ) on the downstream side of the SCR elements 11 but upstream from any (optional) oxidation catalyst 12 is determined 101 and a second concentration (NH₃ or NH₃ + NOₓ) in the same location is determined 102. The first concentration is determined by means of the first sensor 9 and the second concentration is determined by means of the second sensor 10. As has been described above, the actual measurements do not need to take place at the same location, but the second concentration between the SCR elements 11 and the oxidation catalysts 12 can also be determined by measuring the combined concentration of NH₃ and NOₓ on the downstream side of the oxidation catalysts 12 or in a by-pass duct 14. Steps 101, 102 can take place simultaneously.

A first limit value is determined for the first concentration and a second limit value is determined for the second concentration. The limit values do not need to be constant, but they can vary depending on various factors. For instance, the limit values can depend on the operating conditions of the engine 1, such as the engine speed and load. The limit values can also depend on the emission limits in the area where the engine 1 is operated. In the next phase of the method, the first concentration is compared to the first limit value 103 and the second concentration is compared to the second limit value 104. If the first concentration is below the first limit value and the second concentration is above the second limit value, it is an indication of an overdosing situation. If such a situation is detected, reducing agent feeding is decreased 105.

The comparison of the measured concentrations and the limit values is done by the control system. The control unit 8 is connected to the feed pump 7, and in a detected overdosing situation the control unit 8 transmits to the feed pump 7 a signal for decreasing the feed rate.

The first limit value and the second limit value can be based on a target value for NOₓ emissions. The first limit value can be a certain amount or percentage below the target value and the second limit value can be a certain amount or percentage above the target value. Both the target value and the differences between the target value and the limit values can be application specific. As an example, in a certain application the target value for the NOₓ concentration could be 10 ppm. If the NOₓ concentration is below 6 ppm and the combined concentration of NOₓ and NH₃ is above 15 ppm, it can be considered as an indication of an overdosing situation.

It will be appreciated by a person skilled in the art that the invention is not limited to the embodiments described above, but may vary within the scope of the appended claims.

## Claims

1. A method of controlling feeding of reducing agent into an exhaust system of an internal combustion engine (1), the exhaust system being provided with one or more SCR elements (11) for selective catalytic reduction, the method comprising the steps of
- determining a first concentration in exhaust gas stream on the downstream side of the SCR elements (11) and upstream from any oxidation catalyst (12) arranged on the downstream side of the SCR elements (11), the first concentration being the concentration of NOₓ(101),
- determining a second concentration in the exhaust gas stream in the same location as the first concentration, wherein the second concentration is the combined concentration of NOₓ and NH₃ and the second concentration is determined by using a NOₓ sensor that is cross-sensitive to NH₃ (102),
- comparing the first concentration to a first predetermined limit value (103),
- comparing the second concentration to a second predetermined limit value (104), and
- decreasing the reducing agent feeding into the exhaust system in case the first concentration is below the first predetermined limit value and the second concentration is above the second predetermined limit value (105).

2. A method according to claim 1, wherein the second concentration is measured between the SCR elements (11) and the oxidation catalysts (12).

3. A method according to claim 1, wherein the second concentration is measured on the downstream side of the oxidation catalysts (12).

4. A method according to claim 1, wherein the second concentration is measured by separating a gas sample from main exhaust gas stream, conducting the gas sample through an oxidation catalyst (15) and measuring the second concentration on the downstream side of the oxidation catalyst (15).

5. An exhaust system for an internal combustion engine (1), the exhaust system comprising
- at least one SCR element (11) for selective catalytic reduction,
- at least one reducing agent injector (5) for introducing reducing agent into the exhaust system upstream from the SCR element (11),
- a first sensor (9) for determining the concentration of NOₓ in exhaust gas stream on the downstream side of the SCR elements (11) and upstream from any oxidation catalyst (12) arranged on the downstream side of the SCR elements (11),
- a second sensor (10) that is a NOₓ sensor cross-sensitive to NH₃ for determining the combined concentration of NH₃ and NOₓ on the downstream side of the SCR elements (11), and
- a control system for controlling injection of the reducing agent,
wherein the control system is configured to
- compare the concentration measured with the first sensor (9) to a first predetermined limit value,
- compare the concentration measured with the second sensor (10) to a second predetermined limit value, and
- to reduce injection of the reducing agent if the concentration measured with the first sensor (9) is below the first predetermined limit value and the concentration measured with the second sensor (10) is above the second predetermined limit value.

6. An exhaust system according to claim 5, wherein the second sensor (10) is arranged to measure the combined concentration of NOₓ and NH₃ between the SCR elements (11) and the oxidation catalysts (12).

7. An exhaust system according to claim 5, wherein the second sensor (10) is arranged to measure the combined concentration of NOₓ and NH₃ on the downstream side of the oxidation catalysts (12).

8. An exhaust system according to claim 5, wherein the exhaust system comprises a by-pass duct (14) for separating a gas sample from main exhaust gas stream on the downstream side of the SCR elements (11) and an oxidation catalyst (15) arranged in the by-pass duct (14), and wherein the second sensor (10) is arranged in the by-pass duct (14) on the downstream side of the oxidation catalyst (15) to measure the combined concentration of NOₓ and NH₃.

## Patentansprüche

1. Verfahren zum Steuern der Einspeisung von Reduktionsmittel in ein Abgassystem eines Verbrennungsmotors (1), wobei das Abgassystem mit einem oder mehreren SCR-Elementen (11) zur selektiven katalytischen Reduktion versehen ist, wobei das Verfahren die folgenden Schritte umfasst
- Bestimmen einer ersten Konzentration im Abgasstrom auf der stromabwärtigen Seite der SCR-Elemente (11) und stromaufwärts von einem Oxidationskatalysator (12), der auf der stromabwärtigen Seite der SCR-Elemente (11) angeordnet ist, wobei die erste Konzentration die NOₓ - Konzentration ist (101),
- Bestimmen einer zweiten Konzentration im Abgasstrom an derselben Stelle wie die erste Konzentration, wobei die zweite Konzentration die kombinierte Konzentration von NOₓ und NH₃ ist und die zweite Konzentration unter Verwendung eines NOx-Sensors bestimmt wird, der gegenüber NH₃ kreuzempfindlich ist (102),
- Vergleichen der ersten Konzentration mit einem ersten vorgegebenen Grenzwert (103),
- Vergleichen der zweiten Konzentration mit einem zweiten vorgegebenen Grenzwert (104) und
- Verringern der Einspeisung des Reduktionsmittels in das Abgassystem, falls die erste Konzentration unter dem ersten vorgegebenen Grenzwert und die zweite Konzentration über dem zweiten vorbestimmten Grenzwert liegt (105).

2. Verfahren nach Anspruch 1, wobei die zweite Konzentration zwischen den SCR-Elementen (11) und den Oxidationskatalysatoren (12) gemessen wird.

3. Verfahren nach Anspruch 1, wobei die zweite Konzentration auf der stromabwärtigen Seite der Oxidationskatalysatoren (12) gemessen wird.

4. Verfahren nach Anspruch 1, wobei die zweite Konzentration gemessen wird, indem eine Gasprobe vom Hauptabgasstrom getrennt wird, die Gasprobe durch einen Oxidationskatalysator (15) geleitet wird und die zweite Konzentration auf der stromabwärtigen Seite des Oxidationskatalysators gemessen wird (15).

5. Abgassystem für einen Verbrennungsmotor (1), wobei das Abgassystem Folgendes umfasst
- mindestens ein SCR-Element (11) zur selektiven katalytischen Reduktion,
- mindestens einen Reduktionsmittelinjektor (5) zum Einbringen von Reduktionsmittel in das Abgassystem stromaufwärts des SCR-Elements (11);
- einen ersten Sensor (9) zum Bestimmen der NOₓ-Konzentration im Abgasstrom auf der stromabwärtigen Seite der SCR-Elemente (11) und stromaufwärts von einem Oxidationskatalysator (12), der auf der stromabwärtigen Seite der SCR-Elemente (11) angeordnet ist,
- einen zweiten Sensor (10), der ein für NH₃ kreuzempfindlicher NOx-Sensor zur Bestimmung der kombinierten Konzentration von NH₃ und NOₓ auf der stromabwärtigen Seite der SCR-Elemente (11) ist, und
- ein Steuerungssystem zum Steuern der Injektion des Reduktionsmittels,
wobei das Steuerungssystem konfiguriert ist, um
- die mit dem ersten Sensor (9) gemessene Konzentration mit einem ersten vorgegebenen Grenzwert zu vergleichen,
- die mit dem zweiten Sensor (10) gemessene Konzentration mit einem zweiten vorgegebenen Grenzwert zu vergleichen und
- die Injektion des Reduktionsmittels zu reduzieren, wenn die mit dem ersten Sensor (9) gemessene Konzentration unter dem ersten vorgegebenen Grenzwert liegt und die mit dem zweiten Sensor (10) gemessene Konzentration über dem zweiten vorgegebenen Grenzwert liegt.

6. Abgassystem nach Anspruch 5, wobei der zweite Sensor (10) angeordnet ist, um die kombinierte Konzentration von NOₓ und NH₃ zwischen den SCR-Elementen (11) und den Oxidationskatalysatoren (12) zu messen.

7. Abgassystem nach Anspruch 5, wobei der zweite Sensor (10) angeordnet ist, um die kombinierte Konzentration von NOₓ und NH₃ auf der stromabwärtigen Seite der Oxidationskatalysatoren (12) zu messen.

8. Abgassystem nach Anspruch 5, wobei das Abgassystem einen Bypasskanal (14) zum Trennen einer Gasprobe vom Hauptabgasstrom auf der stromabwärtigen Seite der SCR-Elemente (11) und einen im Bypasskanal (14) angeordneten Oxidationskatalysator (15) umfasst, und wobei der zweite Sensor (10) in dem Bypass-Kanal (14) auf der stromabwärtigen Seite des Oxidationskatalysators (15) angeordnet ist, um die kombinierte Konzentration von NOₓ und NH₃ zu messen.

## Revendications

1. Procédé de commande de l'alimentation d'un agent réducteur dans un système d'échappement d'un moteur à combustion interne (1), le système d'échappement étant pourvu d'un ou de plusieurs éléments SCR (11) pour une réduction catalytique sélective, le procédé comprenant les étapes de
- détermination d'une première concentration dans le flux de gaz d'échappement du côté aval des éléments SCR (11) et en amont de tout catalyseur d'oxydation (12) agencé du côté aval des éléments SCR (11), la première concentration étant la concentration de NOₓ (101),
- détermination d'une seconde concentration dans le flux de gaz d'échappement au même emplacement que la première concentration, dans lequel la seconde concentration est la concentration combinée de NOₓ et de NH₃ et la seconde concentration est déterminée à l'aide d'un capteur de NOₓ qui est sensible au NH₃ (102),
- comparaison de la première concentration à une première valeur limite prédéterminée (103),
- comparaison de la seconde concentration à une seconde valeur limite prédéterminée (104), et
- diminution de l'agent réducteur alimentant le système d'échappement dans le cas où la première concentration est inférieure à la première valeur limite prédéterminée et la seconde concentration est supérieure à la seconde valeur limite prédéterminée (105).

2. Procédé selon la revendication 1, dans lequel la seconde concentration est mesurée entre les éléments SCR (11) et les catalyseurs d'oxydation (12).

3. Procédé selon la revendication 1, dans lequel la seconde concentration est mesurée du côté aval des catalyseurs d'oxydation (12).

4. Procédé selon la revendication 1, dans lequel la seconde concentration est mesurée en séparant un échantillon de gaz du flux de gaz d'échappement principal, en conduisant l'échantillon de gaz à travers un catalyseur d'oxydation (15) et en mesurant la seconde concentration du côté aval du catalyseur d'oxydation (15).

5. Système d'échappement pour un moteur à combustion interne (1), le système d'échappement comprenant
- au moins un élément SCR (11) pour une réduction catalytique sélective,
- au moins un injecteur d'agent réducteur (5) pour introduire un agent réducteur dans le système d'échappement en amont de l'élément SCR (11),
- un premier capteur (9) pour déterminer la concentration de NOₓ dans le flux de gaz d'échappement du côté aval des éléments SCR (11) et en amont de tout catalyseur d'oxydation (12) agencé du côté aval des éléments SCR (11),
- un second capteur (10) qui est un capteur de NOₓ sensible au NH₃ pour déterminer la concentration combinée de NH₃ et de NOₓ du côté aval des éléments SCR (11), et
- un système de commande pour commander l'injection de l'agent réducteur,
dans lequel le système de commande est configuré pour
- comparer la concentration mesurée avec le premier capteur (9) à une première valeur limite prédéterminée,
- comparer la concentration mesurée avec le second capteur (10) à une seconde valeur limite prédéterminée, et
- réduire l'injection de l'agent réducteur si la concentration mesurée avec le premier capteur (9) est inférieure à la première valeur limite prédéterminée et la concentration mesurée avec le second capteur (10) est supérieure à la seconde valeur limite prédéterminée.

6. Système d'échappement selon la revendication 5, dans lequel le second capteur (10) est agencé pour mesurer la concentration combinée de NOₓ et de NH₃ entre les éléments SCR (11) et les catalyseurs d'oxydation (12).

7. Système d'échappement selon la revendication 5, dans lequel le second capteur (10) est agencé pour mesurer la concentration combinée de NOₓ et de NH₃ du côté aval des catalyseurs d'oxydation (12).

8. Système d'échappement selon la revendication 5, dans lequel le système d'échappement comprend un conduit de dérivation (14) pour séparer un échantillon de gaz du flux de gaz d'échappement principal du côté aval des éléments SCR (11) et un catalyseur d'oxydation (15) agencé dans le conduit de dérivation (14), et dans lequel le second capteur (10) est agencé dans le conduit de dérivation (14) du côté aval du catalyseur d'oxydation (15) pour mesurer la concentration combinée de NOₓ et de NH₃.
